# EUROPEAN PATENT APPLICATION

(11) **EP 2 233 185 A1**
(43) Date of publication of application: **29.09.2010**
(21) Application number: 10425085.7
(22) Date of filing: 19.03.2010
(51) Int. Cl.: B01D 25/12, B01D 25/127, B01D 29/09

(54) **Device and process to substitute spent filter element in liquid filter**

(30) Priority: 24.03.2009 IT FI20090059
(71) Applicant: Toscana Enologica Mori di Mori Giorgio E C. S.N.C., 50028 Tavernelle Val di Pesa (FI) (IT)
(72) Inventor: Mori, Giorgio, 50028 Tavarnelle Val di Pesa (FI) (IT)
(74) Representative: Mannucci, Michele

(57) **Abstract**

The device comprises a filter unit in which the filtering element consists of a continuous tape (13) made of fibrous material that passes through the filter unit (5; 100) to intercept with one or more portions of its extension the liquid to be filtered. The device can also comprise: a pair of motorized drive rollers (31, 37) of the tape (13) suitable to feed it when one or more tape portions require to be replaced. The pair of rollers (31, 37) is positioned downstream of the filter unit (5; 100). There can also be provided thrust means (39, 35) that elastically stress the rollers to press the spent tape (13) therebetween, expelling the liquid that impregnates it; and collection means (51; 115) of the liquid thus extracted.

## Description

### Technical Field

The present invention relates to a filtering device for a liquid to separate residual solids therefrom, for example for oils and other edible liquid products.

### State of the Art

In the filtering of liquids, for example delivered from the process of extracting oil from olives, when it is necessary to promptly separate residual materials in suspension avoiding the conventional and slow process of natural decantation, the liquid is filtered by means of specific filtering devices, such as filter presses. These devices comprise a plurality of filter cloths, for example made of cellulose fibres, which are each held pressed between a respective pair of plates inside which a path of the liquid is defined, so that, by means of a suitable pressure drop, it passes through said filter cloths. During filtering, the separated parts accumulate in the filter cloths until these are saturated, gradually reducing the efficiency of the device until it becomes necessary to replace these cloths. To replace the filter cloths, filtering must be interrupted, the assembly of the support plates of the cloths must be opened and subsequently, after manual replacement of the cloths, closed again. This operation requires manpower and implies a loss of liquid both due to dripping from the opened plates and due to impregnation in the cloths to be disposed of.

DE-A-3315500 describes a filtering device in which there are arranged between consecutive rigid plates filter membranes and a continuous tape forming a conveyor for transporting the dry residue, extracting it from the device. The continuous filtering element comprises drive and guide chains.

### Summary of the Invention

According to one aspect, the invention provides a device and a method that entirely or partly overcome one or more of the drawbacks of prior art devices.

In one embodiment, the device comprises a filter unit with at least one filtering element, consisting of a continuous tape of disposable permeable material, such as paper or paperboard, which passes through the filter unit to intercept with one or more portions of its extension the liquid to be filtered. The tape is continuous in the sense that it is dispensed from a reel and is then collected at the outlet of the device. It passes through the device once, that is, each portion of the tape is used only once and then removed. The portions of spent filtering tape are removed from the device and recovered, after squeezing to remove most of the liquid from the structure of the tape. Advantageously, the device can also be provided with feed means, such as a pair of motorized rollers, designed and arranged to feed said tape when it becomes necessary to replace said one or more portions of tape, for example following impregnation or saturation of the tape with residues removed by filtering from the liquid that passed through the tape.

Squeezing means or extractors are advantageously provided, to extract from the spent tape the remaining liquid contained therein. For example, the squeezing means or members can be incorporated in or consist of the same tape feed means. In some embodiments, one or more pairs of rollers can be provided, at least one of which is motorized, wherein the rollers of the or of each pair are pressed against each other to squeeze the tape while it is fed by said rollers. In other embodiments other feed means can be provided, such as belt means and/or other squeezing members, such as bars, sheets, plates or the like, pressed against one another and between which the spent filtering tape is passed.

In one embodiment of the invention, the filter unit comprises a pair of plates facing each other and having corresponding openings for the passage of the liquid to be filtered, the plates being pressed against each other with the filtering tape interposed. The openings of one plate are in communication with a feed duct of the liquid to be filtered and those of the other plate with a delivery duct of the filtered liquid. Moreover, thrust means are provided, suitable to press the plates against each other, to clench the tape with a predetermined elastic force, suitable to allow liquid-tight feed of the tape during filtering. In other words, during filtering said plates are pressed against each other to prevent, on the one hand, losses of liquid from the edge of the plates in contact with the filtering tape and to allow, on the other hand, continuous feed of the filtering tape. The tape can be fed with a sufficiently slow continuous feed motion to almost saturate each portion of filtering tape in the time interval during which it passes through the opposing liquid passage openings of said plates.

In another embodiment of the invention, the filter unit is of the filter press type and comprises at least one pair of opposed plates and releasable sealing means suitable to thrust the plates of each pair against each other to tightly clamp therebetween, during filtering, a respective portion of said continuous filtering tape. Feed of the tape between said plates is interrupted during filtering, and is activated only during release of the sealing means of the plates to allow, once the plates of each pair have been moved away from each other, replacement of the respective portion of tape when it is saturated with filtered residue.

In a preferred embodiment of the invention which uses a filter press with more than one pair of sealing plates and respective portions of the filtering cloth, idle guiding rollers are provided, defining a path of the filtering tape which extends through all the various pairs of plates, each plate of each pair being able to support a respective idle tape guiding roller.

According to another aspect, the invention relates to a process for filtering a liquid by means of a continuous filtering tape, preferably with a device of the type described above, comprising the following steps:
- advancing the filtering tape gradually through a filter unit;
- extracting from said filter unit subsequent portions of said filtering tape impregnated with filtrate removed from said liquid, so as to remove from the filter unit the spent portion of tape.

In some embodiments, the process comprises the steps of:
- advancing the filtering tape until the portion of spent tape is removed from the filtering area;
- squeezing the spent portion of filtering tape downstream of the filter unit to extract the majority of the liquid contained therein, collecting it to prevent shedding thereof.

In this process, advancing of the filtering tape can be performed by advancing the tape continuously during filtering or, if the filter unit used is of the filter press type, discontinuously by alternating a filtering step with the tape stopped with a tape replacement step in which feed of the liquid to be filtered is interrupted. In this latter case, the process according to the invention comprises the following further steps, which can also be performed automatically if the filtering device comprises specific programming means with microprocessor:
- during filtering, by means of a pressure sensor, detecting the drop in pressure of the liquid through the filter press;
- when said drop exceeds a predetermined value, interrupting the filtering operation stopping feed of the liquid to be filtered;
- releasing the thrust that clamps each pair of filter plates and moving the plates away from each other to release the clamp of the respective portion of tape, collecting the residual liquid that drains from the open plates to prevent loss thereof;
- activating advancement of the tape until the group of portions of spent tape has been replaced with another group of portions not yet used, and then stopping advancement of the tape;
- restoring the mutual clamp of the plates of said at least one pair of plates with the respective new portion of tape interposed;
- reactivating feed of the liquid to be filtered.

From the above it is clear that with the devices described according to the embodiments of the present invention, the filtering element can be easily renewed without losses of liquid and saving in manpower.

Further advantageous characteristics and embodiments of the device and of the process according to the invention are indicated in the dependent appended claims and will be described in greater detail below with reference to two examples of embodiment.

### Brief Description of the Drawings

The invention will be better understood by following the description and accompanying drawing, which shows practical non-limiting embodiment. More in particular, in the drawing:
Figs.1 and 2 respectively show a schematic view and a partially portional side view of a filtering device according to a first embodiment of the invention;
Fig.3 shows an enlarged view of the sectional detail III of Fig.2
Fig.4 shows a sectional plan view according to IV-IV of Fig.3;
Fig.5 shows a side view of a filtering device in a second embodiment of the invention
Fig.6 shows the enlarged detail VI of Fig. 5 in filtering arrangement, with a protective external casing removed;
Fig.7 shows a sectional view according to VII-VII of Fig.6; and
Fig.8 shows a view similar to that of Fig.6, but in the arrangement for replacing the spent portions of the filtering element.

### Detailed Description of Embodiments of the Invention

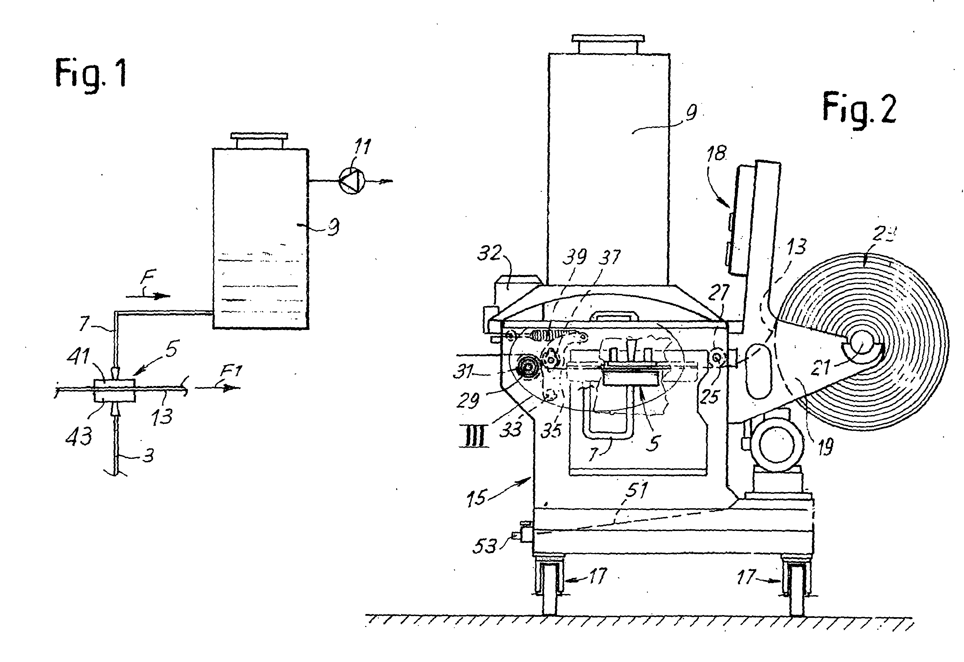

In a first embodiment of the invention, Fig. 1 shows a diagram of a filtering device comprising, in order: a feed duct 3 of the liquid to be filtered coming from a feed vessel external to the device and not shown in the drawing, a filter unit 5 in strict sense, a delivery duct 7 of the filtered liquid and a vessel for receiving it. During filtering, the liquid follows the path described above in the direction of the arrow F of Fig.1 due to the difference in pressure generated by a vacuum pump 11 between the feed vessel, in which the liquid is contained at atmospheric pressure, and the vessel 9 to which the vacuum pump 11 is connected. The filter unit 5 is passed through a filtering paper tape 13, which during filtering is fed according to its longitudinal extension according to the arrow F1 (Fig.1), as will be explained below.

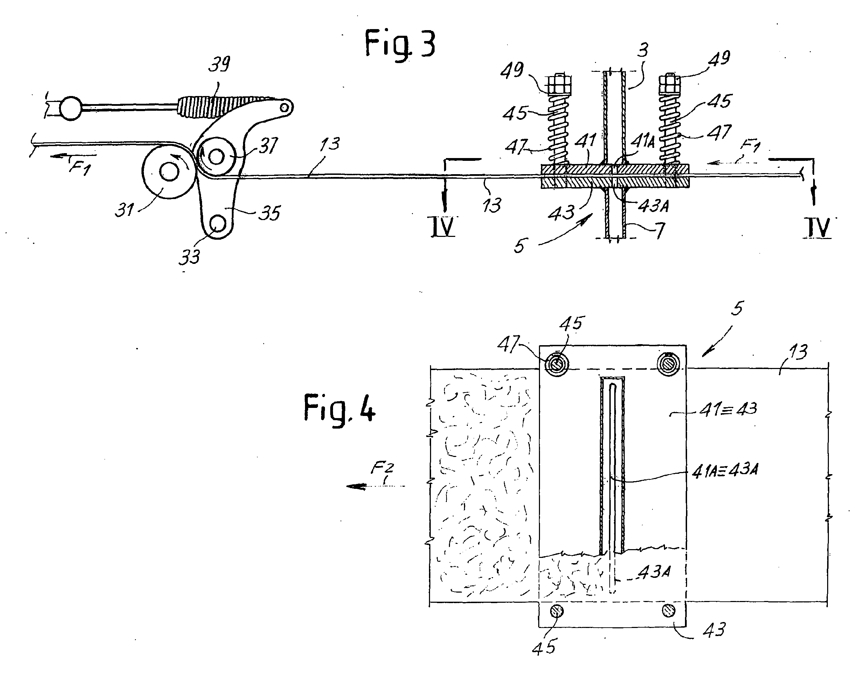

In practice, with reference also to Figs.2 to 4, the vessel 9 is supported by a bent and welded sheet metal structure 15 which, for ease of use, is movable on wheels 17. Fastened to the structure 15 are a control panel 18, a pair of brackets 19 (that support a shaft 21, in turn supporting a reel 23 of tape 13), the filter unit 5 a pin 25 that supports a drive roller 27 for the tape 13, bearings 29 to support a motorized roller 31 and a pin 33. Pivoted to the pin 33 are arms 35 to support an idle roller 37, the arms 35 being stressed by springs 39 to press the idle roller 37 against the motorized roller 31, the tape 13 being interposed between the rollers 31 and 35. The roller 31 is rotated in the direction indicated in Fig.3 by means of an electric motor 32 having a vertical axis and motion transmission members, not shown in the drawing.

The filter unit 5 comprises a pair of plates 41, 43 which are pressed against each other with a predetermined force and through which the filtering tape 13 is passed, each of the plates having a respective slot 41A, 43A for passage of the liquid, said slots extending transversely to the tape remaining within it, as shown in Fig.4. The terminal end of the feed duct 3 of the liquid to be filtered is welded to the plate 41, on the opposite side with respect to the side in contact with the tape 13, and the terminal end of the delivery duct 7 of the filtered liquid is welded to the plate 43, on the opposite side with respect to the side in contact with the tape 13. The plate 43 is fastened rigidly by means of supports (not shown in the drawing) to the load-bearing structure 15 of the filtering device and welded thereto are four vertical pins 45 that act as lateral guide for the tape 13 and for the other plate 41 passing through corresponding holes thereof. Inserted on said pins 45 are respective springs 47, which are clamped between clamping nuts 49 (on threaded ends of these pins) and the plate 41, to stress the plates 41, 43 against one another with a predetermined thrust, such as to allow feed of the tape 13 and simultaneous sealed closing of the plates over the tape to prevent leakages and shedding of liquid.

With this device, the liquid to be filtered is sucked from the feed vessel to the filtering tape 13 through the feed duct 3 and the slot 41A, passes through the tape 13 leaving the suspended impurities thereon and then reaches the vessel 9 through the delivery duct. Simultaneously, the filtering tape 13 is fed by the pair of rollers 31, 37 in the direction of the arrows F2 (Figs.2, 3) unwinding it from the reel 23. During passage between the rollers 31, 37 the pressure exerted on the tape 13 by these rollers extracts the liquid still retained in the tape and collecting it into a tank 51 having an inclined base (Fig.2) and contained in the load-bearing structure 15, from which the liquid can be extracted by means of a tap 53. The tape 13 is fed at a speed such that a transverse portion of the tape, in the time required to pass through the width of the slot 41A-43A, becomes saturated by the solid parts separated during filtering.

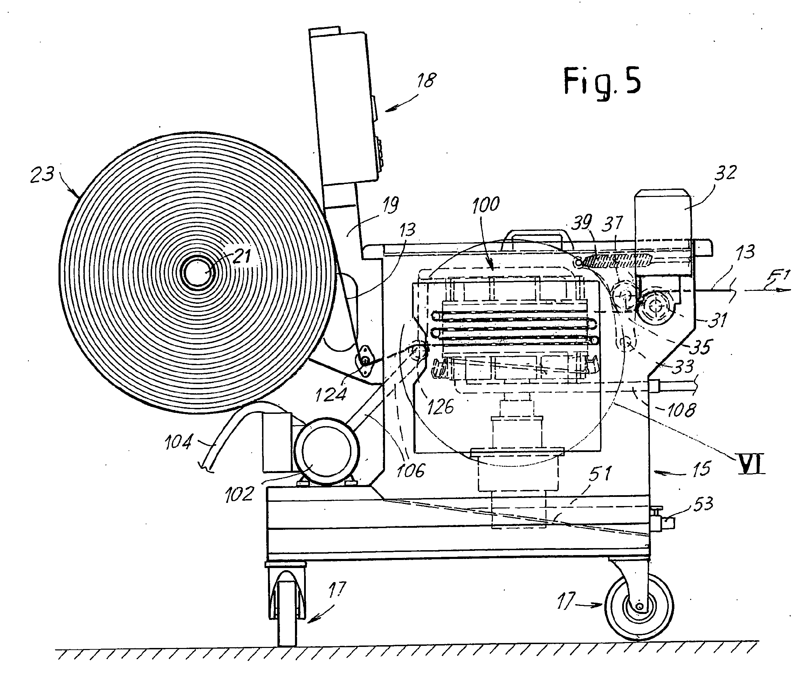

There is now described a filtering device according to another embodiment of the invention with reference to Figs.5, 6 and 7 in which similar parts, and for the same function, to those described for the first embodiment described are indicated with the same reference numbers. The device has a sheet metal load-bearing structure 15 (Fig.5) mounted on wheels 17 to which the following are fastened: a control panel 18, a pair of brackets 19 to support a reel 23 of filtering tape 13, bearings to support a motor-driven roller 31 and a relative electric motor 32, a pin 33 pivoted to which are arms 35 to support an idle roller 37, the arms 35 being stressed by springs 39 to press the idle roller 37 against the motorized roller 31 with the tape 13 interposed, to squeeze the liquid impregnating the spent tape and feed it in the direction of the arrow F1.

Between the reel 23 and the pairs of rollers 31, 37 there is arranged a filter unit 100 of the filter press type to which an electric pump 102, fastened to the load-bearing structure 15, conveys the liquid to be filtered, picking it up by means of a flexible hose 104 from a vessel external to the device (and not shown in the drawing) and delivering it to the filter press by means of a feed duct 106, the filtered liquid being delivered from the filter press 100 by means of a delivery duct 108.

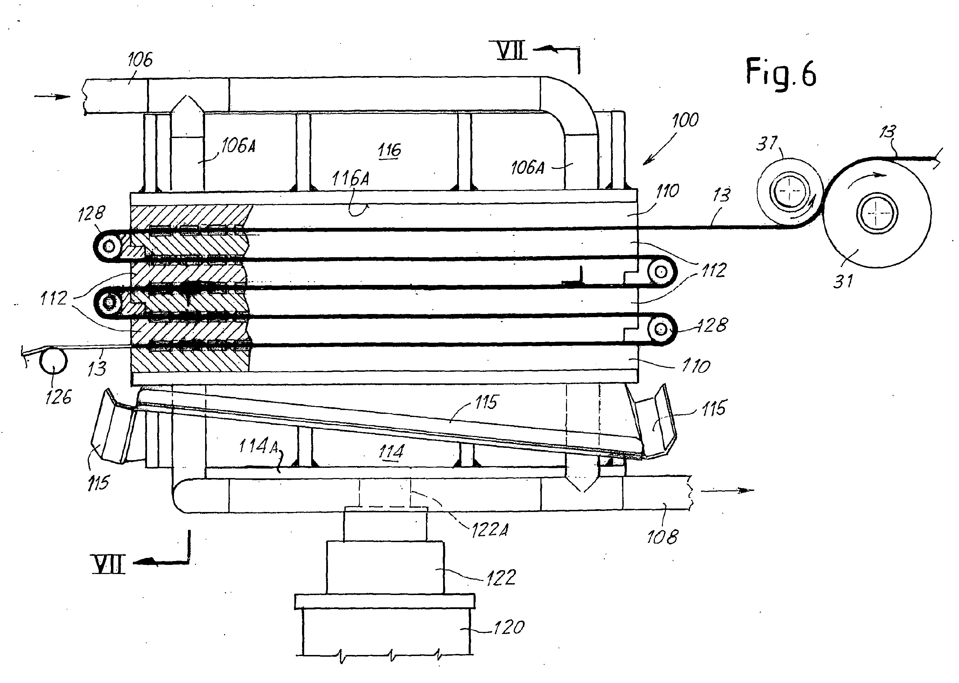

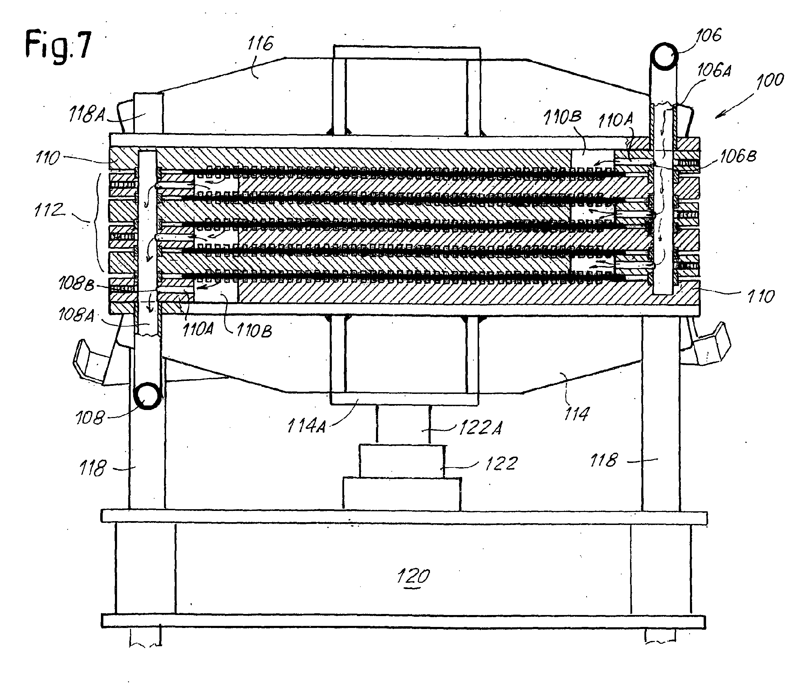

The filter press 100 (see also Figs.6 and 7) comprises a pack of superimposed horizontal plates, precisely two end plates 110 and four intermediate plates 112 through which the filtering tape 13 is made to pass with a winding path. The plates 110, 112 are pressed against each other with the tape 13 interposed by means of two rigid metal structures - one base 114 and one lid 116 - which have respective flat surfaces 114A, 116A in contact with the external surfaces of the pack of plates 110, 112. According to a configuration customary in filter presses, the base 114 and the lid 116 can be clamped to each other by means of a portal structure that comprises columns 118 (Fig.7) integral with a lower rigid structure 120, the columns passing freely through, by means of specific holes, the base 114, the pack of plates 110, 112 and the lid 116 and being engaged (for example by threading) in respective end sleeves 118A. The lower rigid structure 120 is fitted with a thrust means 122, in this case a hydraulic jack, which by means of a moving strut 122A (shown in contact with a cross-member 114A welded to the base 114 in Figs.6 and 7, partially spaced therefrom in Fig.7) can generate a predetermined thrust between the rigid structure 120 and the base 114, said thrust, by means of the columns 118 and the sleeves 118A, being translated into a vertical thrust that presses together the plates 110, 112 of the filter pack and the portions of tape 13 interposed therebetween.

The rigid structure 120 is fastened inside said load-bearing structure 15 of the filtering device, so that this latter contains the assembly of the filter press 100 with the relative portal structure (120, 118, 116, 114).

During filtering (Figs.6 and 7), by means of said portal structure and the jack 122 the plates 110, 112 and the respective portions of filtering tape 13 are clamped together and the pump 102, by means of the feed duct 106, feeds the liquid to be filtered to two short sections of vertical pipe 106A that pass through the plates 110, 120 in proximity of two ends of these on the right side (observing Fig.7) of the pack of plates. The faces of the plates 110, 120 in contact with the respective filtering tape 13 have, in a manner known in filter presses, a ribbed surface suitable to distribute the liquid to be filtered (see small flow arrows in Fig.7) from the ducts 106A - by means of distribution holes 106B in the ducts 106A and 110A in the plates 110, 112, and slots 110B in the plates 110, 112 - approximately to the entire surface of the portion of filtering tape 13 clamped between said plates. Similarly, the filtered liquid which has passed through each portion of the tape 13, is conveyed by means of the ribbed surface of the plates 110, 112 in contact with the filtering tape 13, slots 110B, distribution holes 110A in the plates 110, 112 and corresponding holes 108B in two short sections of the vertical pipe 108A. These sections of the vertical pipe 108A pass through the plates 110, 120 in proximity of two ends thereof on the left side (observing Fig.7) of the pack of plates 110, 112 and flow into the delivery duct 108 of the filtered liquid.

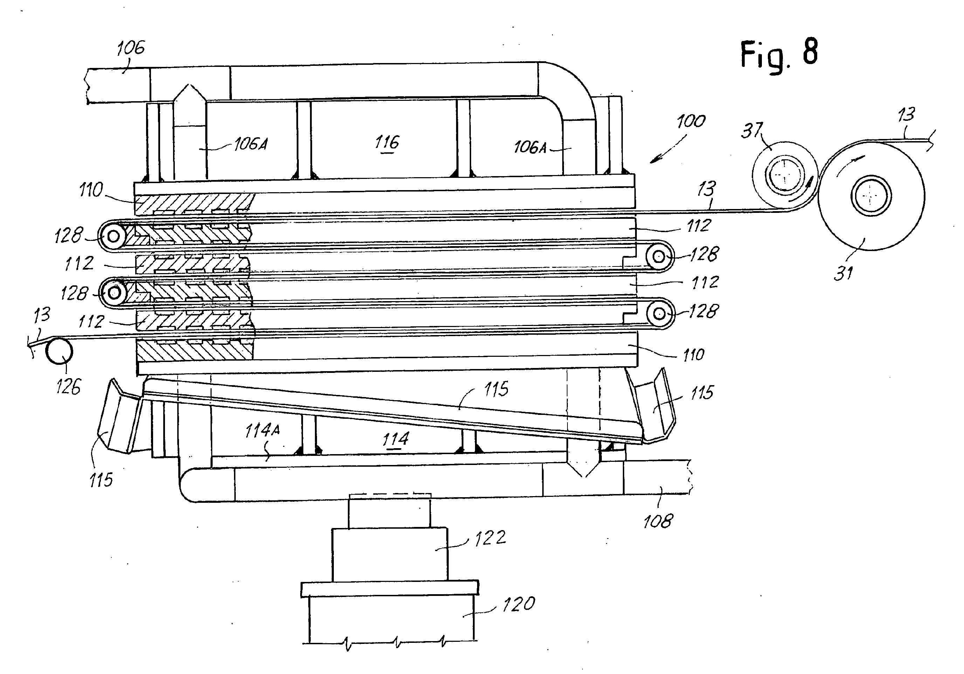

When the portions of filtering tape 13 held between the plates 110, 112 are saturated by solid residues separated from the filtered liquid, the feed pump 102 of the liquid to be filtered to the filter press 100 is stopped and the thrust of the hydraulic jack 122 is released, so that the plates 110, 112 due to their weight are distanced slightly from one another other, as shown in Fig.8, and the remaining oil contained therein drains on the sides of the filter press 100 and drops into the tank 51 (Fig.5) below being conveyed by means of sections of gutter 115 fitted to the lower part of the four sides of the base 114. In this arrangement of the filter press 100, the filtering tape 13, the path of which between the reel 23 and the pair of rollers 31, 37 is defined by idle drive rollers 124, 126 (Fig.5) fitted to the load-bearing structure 15 of the filtering device and by respective idle rollers 128 (Fig.8) of the plates 112, is fed by rotating, by means of the motor 32, the roller 31 and the opposed idle roller 37 according to the arrows in Fig.8 until all the portions of saturated tape have been replaced with new portions. In this operation the spent tape 13 is pressed between the rollers 37 and 13 and the liquid thus extracted from the tape drops into the tank with inclined base 51 provided inside the load-bearing structure 15 of the filtering device, from which it can be extracted by means of the tap 53.

Operation of the devices described above can be easily automated by providing each with a specific programmable control unit with microprocessor and specific sensors, such as pressure sensors.

It is understood that the drawing shows just one example, provided merely as a practical demonstration of the invention, which can vary in its forms and arrangements, without however departing from the scope of the concept underlying the invention. Any reference numbers in the appended claims are provided to facilitate reading of the claims with reference to the description and to the drawing, and do not limit the scope of protection represented by the claims.

## Claims

1. A device for filtering a liquid, comprising a filter unit with at least one filtering element, wherein said filtering element comprises a continuous tape (13) of permeable material, which passes through the filter unit (5; 100) to intercept with one or more portions of its extension the liquid to be filtered; **characterized by** comprising: a tape (13) driving system suitable to unwind said tape from a reel and advance said tape through the device when said one or more portions of tape require to be replaced; and squeezing members to squeeze said tape and extract therefrom the liquid impregnating it.

2. A device as claimed in claim 1, **characterized in that** said tape is made of fibrous material, preferably paper or paperboard.

3. A device as claimed in claim 1 or 2, **characterized in that** said driving means comprise a pair of rollers (31, 37), at least one of which is motorized.

4. A device as claimed in claim 1, 2 or 3, **characterized by** a spent tape collecting system, said tape being used only once across said device.

5. A device as claimed in one or more of the preceding claims, **characterized in that** said squeezing members are combined with said driving means.

6. A device as claimed in claim 4 e 5, **characterized in that** the rollers of said pair are associated at thrust means (39, 35) which elastically stress said rollers to press the spent tape (13) therebetween, expelling the liquid that impregnates it.

7. A device as claimed in one or more of claims the preceding claims, **characterized in that** it comprises collection means (51; 115) of the liquid extracted from the spent tape by means of said squeezing members.

8. A device as claimed in one or more of the preceding claims, **characterized in that** the filter unit comprises: a pair of plates (41, 43) facing each other and each having at least one respective opening (41A, 43A) for passage of the liquid to be filtered, said at least one aperture (43A) of a plate (43) being in communication with a feed duct (3) of the liquid to be filtered and said at least one opening (41A) of the other plate being in communication with a delivery duct (7) of the filtered liquid.

9. A device as claimed in claim 8, **characterized in that** said plates are pressed against each other with the tape (13) interposed, and **in that** thrust means (47) are provided, suitable to press the plates (41, 43) against each other, to clench the tape (13) with an elastic force suitable to allow liquid-tight feed of the tape (13) during filtering.

10. A device as claimed in one or more of claims 1 to 7, **characterized in that** said filter unit is a filter press (100) comprising at least one pair of opposed plates (110, 112) and releasable sealing and clamping means (114, 116, 118, 122) of the plates of each pair, said releasable sealing means being suitable to thrust the plates of each pair against each other to clamp therebetween during filtering a respective portion of said filtering tape (13) and to move said plates away from each other allowing feed of the tape (13) to allow replacement of the portion of tape (13) held by each of said pairs of plates (110, 112) when this is saturated by filtered residue, feed of the tape between said plates being interrupted during filtering and activated only during release of said sealing means of the plates (114, 116, 118, 122).

11. A device as claimed in claim 10, **characterized in that** the filter unit (100) is provided with a plurality of said pairs of plates (114, 116, 118, 122), and comprises idle transmission rollers (128) defining a path of the filtering tape which winds through all the various pairs of plates.

12. A device as claimed in claim 11, **characterized in that** at least some of said plates (110, 112) have a respective transmission roller (128).

13. A process for filtering a liquid by means of a continuous filtering tape (13), comprising the following steps:
- gradually unwinding said filtering tape from a reel;
- gradually advancing the filtering tape (13) through a filter unit;
- extracting from said filter unit subsequent portions of said filtering tape impregnated with filtrate removed from said liquid, so as to remove from said filter unit the spent portion of tape;
- squeezing the spent portion of tape to extract residual liquid from said spent tape and collect said liquid.

14. Process as claimed in claim 13, comprising the step of recovering the spent filtering tape to remove it.

15. Process as claimed in claim 13, or 14, **characterized in that** said filtering tape (13) is fed during filtering, feeding said filtering tape with a speed sufficient to saturate each portion of tape in the time interval in which it passes through the filter unit (5).

16. Process as claimed in claim 13, or 14, comprising the steps of:
- filtering the liquid through at least a portion of said filtering tape;
- during filtering, by means of a pressure sensor, detecting the drop in pressure of the liquid through the filter unit (100);
- when this drop exceeds a predetermined value, interrupting the filtering operation stopping feed of the liquid to be filtered;
- activating feed of the tape (13) until the group of portions of spent tape has been replaced with another group of portions not yet used, and then stopping feed of the tape;
- reactivating feed of the liquid to be filtered.

17. Process as claimed in claim 16, wherein during filtering one or more portions of filtering tape are clamped between respective plates, said plates being moved away from each other to release the tape and allow feed thereof.
